# EUROPÄISCHE PATENTANMELDUNG

(11) **EP 2 164 124 A1**
(43) Veröffentlichungstag der Anmeldung: **17.03.2010**
(21) Anmeldenummer: 09011564.3
(22) Anmeldetag: 09.09.2009
(51) Int. Cl.: H01M 8/04, H01M 8/06, H01M 8/12

(54) **Vorrichtung zur Luftversorgung von Brennstoffzellensystemen**

(30) Priorität: 12.09.2008 AT 14232008
(71) Anmelder: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage, Jörg, 45329 Essen (DE); Kraus, Matthias, 42929 Wermelskirchen (DE); Oerder, Bodo, 42897 Remscheid (DE); Paulus, Jochen, 42655 Solingen (DE)
(74) Vertreter: Hocker, Thomas

(57) **Zusammenfassung**

Vorrichtung zur Luftversorgung von Brennstoffzellensystemen (1) mit einem Brennstoffzellenstapel (2), sowie mit einem Reformer (3) und / oder Nachbrenner (4), bei der zur Luftversorgung der Komponenten (2, 3, 4) des Brennstoffzellensystems (1) ein gemeinsames Gebläse (5) oder ein gemeinsamer Kompressor verwendet wird, von diesem Gebläse (5) oder Kompressor eine Sammelleitung (6) zu dem Brennstoffzellenstapel (2) sowie Reformer (3) und / oder Nachbrenner (4) führt, diese Sammelleitung (6) in Individualleitungen (7, 8, 9), welche zu dem Brennstoffzellenstapel (2), sowie zu dem Reformer (3) und / oder Nachbrenner (4) führen, münden und in den Individualleitungen (7, 8, 9) jeweils Regelventile (10, 11, 12) angeordnet sind, wobei die Regelventile (10, 11, 12) vorzugsweise mit Schrittmotoren angetrieben werden.

## Beschreibung

Die Erfindung bezieht sich auf eine Vorrichtung zur Luftversorgung von Brennstoffzellensystemen.

Gemäß dem Stand der Technik werden bei Brennstoffzellensystemen alle luftverbrauchenden Komponenten mit einem eigenen Gebläse oder Kompressor ausgestattet. Hierdurch ist es einfach möglich, jede Komponente mit der individuell benötigten Luftmenge zu versorgen, was angesichts der Tatsache, dass die Komponenten höchst unterschiedliche Luftmengen auf unterschiedlichem Druckniveau benötigen, einfach realisierbar ist. Nachteilig hierbei ist, dass eine Vielzahl von Gebläsen oder Kompressoren benötigt wird.

Der Erfindung liegt die Aufgabe zugrunde für die Versorgung eines Brennstoffzellensystems lediglich ein Gebläse oder einen Kompressor zu benötigen und dennoch die luftverbrauchenden Komponenten des Systems individuell bedarfsgerecht mit Luft zu versorgen.

Erfindungsgemäß wird dies gemäß den Merkmalen des unabhängigen Vorrichtungsanspruchs dadurch gelöst, dass alle luftverbrauchenden Komponenten an ein gemeinsames Gebläse oder einen gemeinsamen Kompressor in einer Sammelleitung angeschlossen sind und sich in den Individualleitungen vor den luftverbrauchenden Komponenten jeweils Regelventile befinden. Hierdurch ist es möglich, den Luftstrom zu den Komponenten individuell zu regeln.

Vorteilhafte Ausgestaltungen ergeben sich entsprechend den Merkmalen der abhängigen Ansprüche.

Befindet sich in der Sammelleitung, in der sich das gemeinsame Gebläse oder der gemeinsame Kompressor befindet, ein weiteres Regelventil, so kann beispielsweise der Druck vor den Individualleitungen und den darin befindlichen Regelventilen beeinflusst werden. Hierdurch wird die Steuerung beziehungsweise Regelung erleichtert. Ein Sensor, welcher den Druck, Volumen- oder den Massenstrom in der Sammelleitung überwacht, kann hierbei zur Steuerung oder Regelung des Regelventils in der Steuerleitung dienen. Ein Drucksensor muss hierbei stromab des Regelventils angeordnet sein, während die Position eines Massen- oder Volumenstromsensors vor oder hinter dem Ventil angeordnet sein kann.

Ein Druckbehälter in der Sammelleitung stromab des Gebläses kann einerseits das Durchdringen von Druckstößen des Gebläses in das System vermeiden und dient ferner dazu, dass die stromab des Druckbehälters angeordneten Ventile lediglich als Druckniveauregler arbeiten müssen. Der Druck im Druckbehälter muss etwas größer sein als der maximal benötigte Druck in der Komponente, welche den höchsten Druck benötigt.

In den luftverbrauchenden Komponenten des Brennstoffzellensystems oder an deren Ausgang können Sensoren angeordnet sein, deren Signal darüber informiert, ob die zugeführte Luftmenge der Sollluftmenge entspricht oder ob die Luftmenge erhöht oder gedrosselt werden muss. Alternativ kann die Bestimmung der zugeführten Luftmenge in den Individualleitungen auch mittels Druck-, Volumen- oder Massenstrommessung erfolgen. Erfindungsgemäß können auch bei den unterschiedlichen Komponenten unterschiedlichen Sensoren an unterschiedlichen Orten (stromauf, in oder stromab der Komponenten) eingesetzt werden.

Das erfindungsgemäße Verfahren zum Betrieben der erfindungsgemäßen Vorrichtung sieht vor, dass mittels der Signale der den Komponenten zugeordneten Sensoren die Regelventile in den Individualleitungen gesteuert werden, um jeweils bedarfsgerechte Luftmassenströme zu erhalten.

Mittels des Signals des Druck-, Volumen- oder Massenstromsensors in der Sammelleitung kann der Öffnungsgrad des Regelventils in der Sammelleitung gesteuert werden, um einen vorgegebenen Druck- oder Volumenstrom zu erhalten. Das gleiche Ergebnis kann auch durch die entsprechende Steuerung des Gebläses oder des Kompressors erzielt werden.

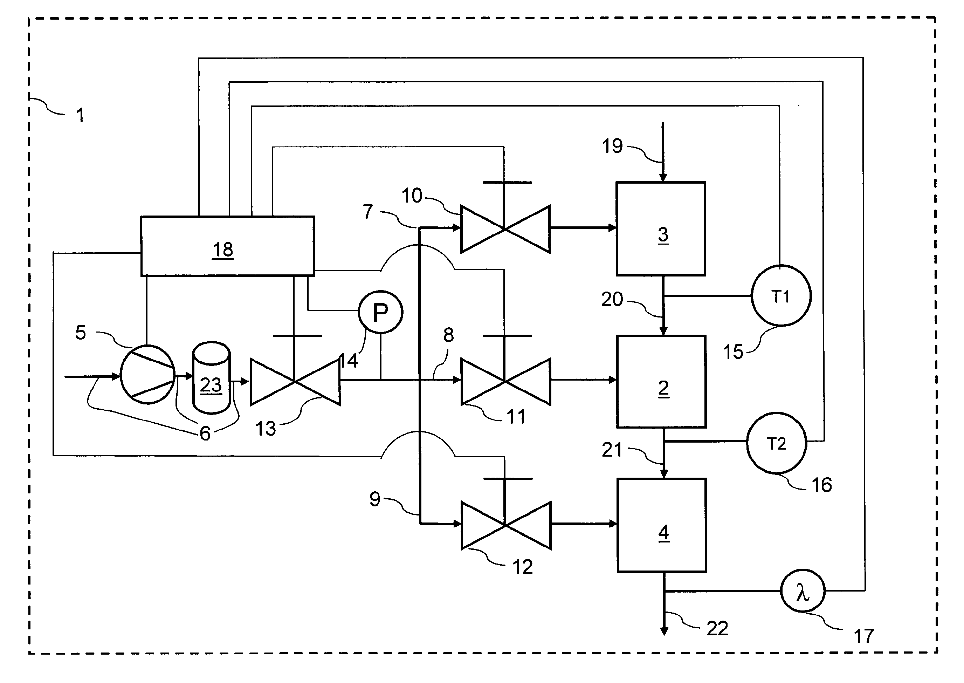

Die Erfindung wird nun anhand der Figur detailliert erläutert. Hierbei zeigt die Figur ein erfindungsgemäßes Brennstoffzellensystem.

Ein Brennstoffzellensystem 1 umfasst einem Brennstoffzellenstapel 2 mit vorgeschaltetem Reformer 3 zur Erzeugung eines wasserstoffreichen Prozessgases und nachgeschaltetem Nachbrenner 4 zur Verbrennung unverbrannter Prozessgasbestandteile. In das Brennstoffzellensystem 1 führt eine Luft führende Sammelleitung 6 zu einem Gebläse 5. Die Sammelleitung 6 führt hinter dem Gebläse 5 über einen Druckbehälter 23 zu einem Regelventil 13, hinter dem sich wiederum ein Drucksensor 14 befindet. Die Sammelleitung 6 mündet in drei Individualleitungen 7, 8, 9, welche zu dem Brennstoffzellenstapel 2, dem Reformer 3 und dem Nachbrenner 4 führen. In den Individualleitungen 7, 8, 9 befinden sich jeweils Regelventile 10, 11, 12. Diese Regelventile 10, 11, 12 werden ebenso wie das Regelventil 13 von Schrittmotoren angetrieben. In den Reformer 3 führt eine Brennstoffzuführung 19. Zwischen Reformer 3 und Brennstoffzellenstapel 2 ist eine Brenngasleitung 20, zwischen dem Brennstoffzellenstapel 2 und dem Nachbrenner 4 eine Brennstoffzellenabgasleitung 21 angeordnet. Nicht dargestellt ist die elektrische Ausgangsleitung des Brennstoffzellenstapels 2. Dem Nachbrenner 4 folgt eine Abgasleitung 22. In der Brenngasleitung 20 zwischen Reformer 3 und Brennstoffzellenstapel 2 ist ein Temperatursensor 15 positioniert. Auch in der Brennstoffzellenabgasleitung 21 zwischen dem Brennstoffzellenstapel 2 und dem Nachbrenner 4 ist ein Temperatursensor 16 montiert. In der Abgasleitung 22 befindet sich eine Lambdasonde 17. Die Sensoren 14, 15, 16, 17, die Regelventile 10, 11, 12, 13 sowie das Gebläse 5 sind mit einer Regelung 18 verbunden.

Beim Betrieb des Brennstoffzellensystems 1 komprimiert das Gebläse 5 die Luft auf einen Druck p, der größer als der maximal benötigte Druck einer der Komponenten 3, 4, 5 ist. Im Druckbehälter 23 wird unter Druck eine bestimmte Luftmenge bevorratet, so dass der Druck mittels des Ventils 13 vor den Ventilen 10, 11, 12 geregelt werden kann. Jede Komponente 3, 4, 5 erhält über die ihr zugeordneten Regelventile 10, 11, 12 die Menge Luft, die die Komponente 3, 4, 5 im aktuellen Betriebszustand gerade benötigt. Alternativ kann auf den Druckbehälter 23 verzichtet werden. Das Gebläse 5 fördert dann immer gerade soviel Luft, um den Druck p vor den Regelventilen 10, 11, 12 der Komponenten 3, 4, 5 aufrecht zu erhalten.

Das Regelventil 13 in der Sammelleitung 6 ist optional und ermöglicht den Betrieb des Gebläses 5 mit konstanter Drehzahl beziehungsweise Leistung. Das Regelventil 13 sorgt dafür, dass der Druck p vor den Regelventilen 10, 11, 12 der mit Luft zu versorgenden Komponenten 3, 4, 5 konstant gehalten wird.

Der Reformer 3 kann mittels partieller Oxidation betrieben werden. Bei der Partiellen Oxidation (POX) von Kohlenwasserstoffen wird ein unterstöchiometrisches Brennstoff-LuftGemisch in dem Reformer 3 teilweise oxidiert, wodurch ein wasserstoffreiches Synthesegas, welches in de Brennstoffzellenstapel 2 weiterverwendet werden kann, entsteht.

Es wird zwischen Thermisch Partieller Oxidation (TPOX) und Katalytisch Partieller Oxidation (CPOX) unterschieden. Bei TPOX laufen diese Reaktionen - abhängig von der Luftzahl - bei mindestens 1200°C ab. Bei CPOX liegt die benötigte Temperatur durch den Einsatz eines katalytischen Mediums bei 800 °C - 900 °C. Welche Technik für die Reformierung eingesetzt werden kann, hängt vom Schwefelanteil des verwendeten Brennstoffes ab. Liegt der Schwefelanteil unter 50 ppm kann CPOX verwendet werden. Ein höherer Schwefelanteil würde den Katalysator zu stark vergiften; deswegen wird für diese Brennstoffe das TPOX-Verfahren eingesetzt oder der Brennstoff wird upstream der CPOX mit einem Adsorptionsmittel entschwefelt.

Die partielle Oxidation ist eine exotherme Reaktion (Gl. 1):

(1) CₙHₘ + (ⁿ/₂)*O₂ = n*CO + ^{m}/₂* H₂

Die Reaktionstemperatur ist dabei abhängig von der eingestellten Luftzahl, wobei die Luftzahl der Quotient aus tatsächlichem Luftbedarf zu stöchometrischen Luftbedarf ist. Mit steigender Luftzahl nimmt die Reaktionstemperatur zu, da neben der partiellen Oxidation auch vermehrt die Totaloxidation (Gl. 2) des Brennstoffes abläuft.

(2) CₙHₘ + (n + m/₄)*O₂ = n*CO₂ + ^{m}/₂* H₂O

Durch die Messung der Reaktionstemperatur kann also darauf zurück geschlossen werden, ob dem Reformer zuviel oder zu wenig Luft zugeführt wird.

Mittels des Signals des Temperatursensors 15 stromab des Reformers 3 wird der Durchfluss durch das Regelventil 10 in der luftführende Individualleitung 7 zum Reformer 3 geregelt. Ist die mittels des Temperatursensors 15 gemessene Temperatur niedriger als eine vorgegebene Solltemperatur, so wird dem Reformer 3 mehr Luft durch Öffnen des Regelventils 10 zu geführt. Ist die gemessene Temperatur zu hoch, so wird die Luftzufuhr zum Reformer 3 über das Regelventil 10 zum Reformer 3 gedrosselt.

Zumeist benötigt ein Brennstoffzellensystem auch einen Startbrenner, der in der Figur nicht dargestellt ist. Die Aufgabe des Startbrenners besteht darin, den Reformer 3, die Brennstoffzelle 2 und den Nachbrenner 4 auf Anspringtemperatur zu bringen. Oxidkeramische Brennstoffzellen werden üblicherweise erst ab einer Temperatur von 400°C sauerstoffionenleitend. Ab etwa 650°C können diese oxidkeramischen Brennstoffzellen zur Stromerzeugung ausgenutzt werden.

Erfindungsgemäß kann auch ein Startbrenner stromab der Sammelleitung 6 mit Luft versorgt werden.

Der Startbrenner kann einerseits nur dazu dienen, den Reformer 3, die Brennstoffzelle 2 und den Nachbrenner 4 auf ihre jeweilige Anspringtemperaturen zu bringen. Der Startbrenner kann jedoch auch dazu dienen, bei Bedarf zusätzliche Wärme für Heizzwecke und die Brauchwasserbereitung bereit zu stellen.

Bei dem Brennstoffzellenstapel 2 kann es sich um eine Oxidkeramische Brennstoffzelle (SOFC) handeln. Die oxidkeramische Brennstoffzelle ("Solid Oxide Fuel Cell"- SOFC) ist eine Hochtemperaturbrennstoffzelle. Sie arbeitet bei Betriebstemperaturen zwischen 500°C und 1000°C. Die oxidkeramische Brennstoffzelle hat ähnlich wie eine Polymer-Elektrolyt-Brennstoffzelle einen festen Elektrolyten, der hier aber aus yttriumstabilisiertem Zirkonoxid (ZrO₂/Y₂O₃) besteht.

Bei einer Betriebstemperatur von bis zu 1000°C wird der Kathode des Brennstoffzellenstapels 2 Luft zugeführt. Die hohe Temperatur ist für eine ausreichend hohe Leitfähigkeit des Elektrolyten notwendig. Doppelt negativ geladene Sauerstoff-Ionen (O²⁻) werden durch den Elektrolyten zur Anode des Brennstoffzellenstapels 2 transportiert. Dort verbinden sie sich mit an der Anode aus dem Brenngas gewonnenem Kohlenmonoxid und Wasserstoff zu Kohlendioxid und Wasserdampf.

Aufgrund der hohen der Reaktionstemperatur von oxidkeramischen Brennstoffzellen kann dieser Typ nicht mehr mit Flüssigkeiten gekühlt werden, um die bei der elektrochemischen Reaktion entstehende Joulesche Wärme aus dem Brennstoffzellenstapel 2 abzuführen. Daher wird der Kathode Luft im Überschuss zugeführt. Dieser Luftüberschuss soll einerseits ausreichend Sauerstoff für die elektrochemische Reaktion bereit stellen und anderseits die anfallende Reaktionswärme in der Brennstoffzelle abführen.

Der Luftbedarf der oxidkeramischen Brennstoffzelle ist daher von dem erforderlichen Kühlluftbedarf bestimmt. Das Signal des Temperatursensors 16, der die Temperatur der Kathodenabluft ermittelt, gibt vor, ob das Regelventil 11 in der Individualleitung 8 des Brennstoffzellenstapels 2 mehr oder weniger Luft der Kathode zuführt. Ziel ist es, die Temperatur in dem Brennstoffzellenstapel 2 und somit auch in der Kathodenabluft konstant zu halten, da die Ionen-Leitfähigkeit einer oxidkeramischen Brennstoffzelle durch die Temperatur am Elektrolyten bestimmt ist. Auf diese Temperatur kann durch die Messung der Temperatur der Kathodenabluft geschlossen werden.

Der Nachbrenner 4 setzt mit Luftsauerstoff nicht umgesetztes Brenngas aus dem Brennstoffzellenstapel 2 vollständig um (Gleichungen 3,4, 5). Die dabei freiwerdende Wärme kann einerseits zur Deckung von Wärmesenken im Brennstoffzellensystem 1 genutzt werden und andererseits ausgekoppelt werden auf einen externen Wärme- oder Kühlkreislauf, z.B. das Heizungssystem eines Gebäudes.

(3) CO + ½ O₂ = CO₂ (Anodenoffgas)

(4) H₂ + ½ O₂ = H₂O (Anodenoffgas)

(5) CₙHₘ + (n + m/₄)*O₂ = n*CO₂ + ^{m}/₂* H₂O (Restbrennstoff)

Für die oben beschriebene Aufgabe ist der Nachbrenner 4 stets ausreichend mit Luft zu versorgen. Diese Versorgung erfolgt über das Regelventil 12 in der Individualleitung 9 zum Nachbrenner 4. Das Signal des Sensors 17 gibt vor, ob dass Regelventil 12 dem Nachbrenner 4 mehr oder weniger Luft zuführen soll.

Für die Ermittelung des Luftbedarfes des Nachbrenners 4 können verschiedene Sensoren verwendet werden:
- Der Sensor 17 kann eine Lambdasonde (Nernstsonde) sein, die durch einen Spannungssprung anzeigt, dass die Verbrennung im Nachbrenner 4 beginnt unterstöchometrisch zu werden.
- Der Sensor 17 kann ein CO-Sensor sein, welcher durch die Messung erhöhter Kohlenmonoxidwerte anzeigt, dass die Verbrennung beginnt unterstöchometrisch zu werden.
- Der Sensor 17 kann aber auch ein Temperatursensor sein, der durch die Messung der Temperatur und dem Vergleich mit einem Kennfeld, welches im Labor bestimmt wurde, sowie der Auswertung der Temperaturgradienten durch Variation der Luftzumessung erkennt, dass im Nachbrenner 4 Luftmangel oder Luftüberschuss herrscht.

Neben den oben beschriebenen Methoden zur Ermittelung des Luftbedarfes, können auch Volumenstrommesser vor oder hinter den Regelventilen 10, 11, 12, 13 Verwendung finden. Im Falle des Reformers 3 kann mittels eines Volumenstrommessers für die Luft und eines Volumenstrommessers für den zugeführten Brennstoff die Luftzahl am Reformer 3 bestimmt. Durch schrittweises Öffnen oder Schließen des Regelventils 10 in der luftführenden Individualleitung 7 zum Reformer 3 kann so die Luftzahl einfach verändert werden.

Die Luftbedarfsermittelung an dem Brennstoffzellenstapel 2 mit der Volumenstrommessung hinter dem Regelventil 11 ist alleine nicht ausreichend. Der Luftbedarf des Brennstoffzellenstapels 2 ist durch den Bedarf an Kühlluft und dem Bedarf an Luft für die elektrochemische Reaktion bestimmt. Durch Messung des Stromes I an dem Brennstoffzellenstapel 2 lässt sich über das faradaysche Gesetz der Stoffumsatz an der Brennstoffzellenstapel 2 bestimmen. Diese Bestimmung lässt Rückschlüsse auf den Luftbedarf infolge der elektrochemischen Reaktion zu. Durch die Messung der Leerlaufspannung und die Messung der Spannung, wenn der Brennstoffzellenstapel 2 mit dem Strom I belastet wird, lässt sich die Joulesche Wärme ermitteln. Mit der Jouleschen Wärme lässt sich auf den Kühlluftbedarf schließen. Die Summe der so ermittelten Bedärfe entspricht dem momentanen Luftbedarf des Brennstoffzellenstapels 2. Dieser kann dann mit dem vom Volumenstrommessgerät angezeigten Wert verglichen werden. Durch schrittweises Öffnen und Schließen des Regelventils 11 kann der tatsächliche Luftbedarf des Brennstoffzellenstapels 2 dem errechneten Wert angeglichen werden.

Der über ein Regelventil eingestellte Luftvolumenstrom ist abhängig vom upstream herrschenden Druckniveau. In einer günstigen Ausgestaltung ist das Druckniveau vor dem Regelventil immer konstant. Somit stellen sich immer dieselben Durchflüsse an dem Regelventil ein, unabhängig von den Durchflüssen an den anderen Regelventilen.

Bei detaillierter Kenntnis der Charakteristik der Regelventile kann das Druckniveau vor einem Regelventil auch variieren. Durch das vermehrte Öffnen eines Ventils würden sich in diesem Fall auch die Durchflüsse der anderen Ventile verändern. Dieser Veränderung kann auf zweierlei Weise begegnet werden. Zum einem kann das Fördervolumen des Gebläses 5 angepasst werden oder das Regelventil 13 in der Sammelleitung 6 entsprechend teilweise geöffnet oder geschlossen werden, um wieder die entsprechenden Durchflüsse anzupassen. Zum anderen können auch die anderen Regelventile 10, 11, 12 entsprechend der Veränderung teilweise geöffnet oder geschlossen werden, um die vorher anliegenden Durchflüsse wieder herzustellen. Auch eine Kombination dieser beiden Möglichkeiten ist denkbar.

## Patentansprüche

1. Vorrichtung zur Luftversorgung von Brennstoffzellensystemen (1) mit einem Brennstoffzellenstapel (2), sowie mit einem Reformer (3) und / oder Nachbrenner (4), **dadurch gekennzeichnet, dass** zur Luftversorgung der Komponenten (2, 3, 4) des Brennstoffzellensystems (1) ein gemeinsames Gebläse (5) oder ein gemeinsamer Kompressor verwendet wird, von diesem Gebläse (5) oder Kompressor eine Sammelleitung (6) zu dem Brennstoffzellenstapel (2) sowie Reformer (3) und / oder Nachbrenner (4) führt, diese Sammelleitung (6) in Individualleitungen (7, 8, 9), welche zu dem Brennstoffzellenstapel (2), sowie zu dem Reformer (3) und / oder Nachbrenner (4) führen, münden und in den Individualleitungen (7, 8, 9) jeweils Regelventile (10, 11, 12) angeordnet sind, wobei die Regelventile (10, 11, 12) vorzugsweise mit Schrittmotoren angetrieben werden.

2. Vorrichtung zur Luftversorgung von Brennstoffzellensystemen nach Anspruch 1, **dadurch gekennzeichnet, dass** in der Sammelleitung (6) ein weiteres Regelventil (13) angeordnet ist, welches vorzugsweise mit einem Schrittmotor angetrieben wird.

3. Vorrichtung zur Luftversorgung von Brennstoffzellensystemen nach Anspruch 1 oder 2, **dadurch gekennzeichnet, dass** in der Sammelleitung (6) ein Druckbehälter (23) angeordnet ist.

4. Vorrichtung zur Luftversorgung von Brennstoffzellensystemen nach Anspruch 1 bis 3, **dadurch gekennzeichnet, dass** in dem Brennstoffzellenstapel (2), sowie dem Reformer (3) und / oder Nachbrenner (4) oder in dem Ausgang dieser Komponenten jeweils Sensoren (15, 16, 17) angeordnet sind, wobei diese Sensoren (15, 16, 17) vorzugsweise die Temperatur, die Luftzahl, den Kohlenmonoxid- oder Sauerstoffanteil messen und mit einer Regelung (18) verbunden sind.

5. Vorrichtung zur Luftversorgung von Brennstoffzellensystemen nach einem der Ansprüche 1 bis 4, **dadurch gekennzeichnet, dass** in den Individualleitungen (7, 8, 9), zu dem Brennstoffzellenstapel (2), sowie zu dem Reformer (3) und / oder Nachbrenner (4) Druck-, Volumen- oder Massenstromsensoren angeordnet und mit einer Regelung (18) verbunden sind.

6. Vorrichtung zur Luftversorgung von Brennstoffzellensystemen nach einem der Ansprüche 1 bis 5, **dadurch gekennzeichnet, dass** in der Sammelleitung (6) ein Druck-(14), Volumen- oder Massenstromsensor angeordnet und mit einer Regelung (18) verbunden ist.

7. Verfahren zum Betreiben eines Brennstoffzellensystems nach einem der Ansprüche 4 bis 6, **dadurch gekennzeichnet, dass** mittels der Signale der Sensoren (15, 16, 17) in dem Brennstoffzellenstapel (2), sowie dem Reformer (3) und / oder Nachbrenner (4) oder in dem Ausgang dieser Komponenten der Öffnungsgrad der Regelventile (10, 11, 12) in den Individualleitungen (7, 8, 9) gesteuert wird, um das Signal der Sensoren (15, 16, 17) in dem Brennstoffzellenstapel (2), sowie dem Reformer (3) und / oder Nachbrenner (4) auf einen von der Regelung (18) vorgegebenen Wert zu regeln.

8. Verfahren zum Betreiben eines Brennstoffzellensystems nach Anspruch 7, **dadurch gekennzeichnet, dass** mittels des Signals des Druck- (14), Volumen- oder Massenstromsensors in der Sammelleitung (6) der Öffnungsgrad des Regelventils (13) in den Sammelleitung (6) gesteuert wird, um das Signal des Druck- (14), Volumen- oder Massenstromsensors auf einen von der Regelung (18) vorgegebenen Wert zu regeln.

9. Verfahren zum Betreiben eines Brennstoffzellensystems nach Anspruch 8, **dadurch gekennzeichnet, dass** mittels des Signals des Druck- (14) oder Volumenstromsensors in der Sammelleitung (6) das Gebläse (5) oder der Kompressor gesteuert wird, um das Signal des Druck- (14), Volumen- oder Massenstromsensors auf einen von der Regelung (18) vorgegebenen Wert zu steuern.
